# EUROPÄISCHE PATENTSCHRIFT

(11) **EP 3 717 281 B1**
(45) Veröffentlichungstag und Bekanntmachung des Hinweises auf die Patenterteilung: **24.11.2021**
(21) Anmeldenummer: 18772767.2
(22) Anmeldetag: 11.09.2018
(51) Int. Cl.: B60C 11/13, B60C 11/03, B60C 11/12

(54) **FAHRZEUGLUFTREIFEN**
PNEUMATIC VEHICLE TYRE
PNEUMATIQUE DE VÉHICULE

(30) Priorität: 30.11.2017 DE 102017221582
(43) Veröffentlichungstag der Anmeldung: 07.10.2020
(73) Patentinhaber: Continental Reifen Deutschland GmbH, 30165 Hannover (DE)
(72) Erfinder: SCHLITTENHARD, Jan, 30419 Hannover (DE); BAUER, Claudia, 30419 Hannover (DE)
(74) Vertreter: Continental Corporation
(86) Internationale Anmeldenummer: PCT/EP2018/074364
(87) Internationale Veröffentlichungsnummer: WO 2019/105624

(56) Entgegenhaltungen:
- WO-A1-2016/156745
- DE-T2- 69 917 139
- JP-A- 2001 191 741
- JP-A- 2006 151 222
- JP-A- 2009 214 697
- JP-A- 2011 140 254
- JP-A- 2016 084 082
- US-A1- 2008 202 658
- US-A1- 2015 151 586

## Beschreibung

Die Erfindung betrifft einen Fahrzeugluftreifen mit einem Laufstreifen mit zumindest einer Profilblöcke aufweisenden oder profilblockartig strukturierten Profilblockreihe, wobei die Profilblöcke in Umfangsrichtung durch Querrillen voneinander getrennt sind, welche sich unter einem Winkel ≤ 45° zur axialen Richtung erstrecken, wobei jeder Profilblock querrillenseitig und an der Laufstreifenperipherie von Profilblockkanten begrenzt ist, mit einer Anzahl von sich parallel oder weitgehend parallel zu den Querrillen erstreckenden Einschnitten durchquert ist, welche eine Breite von 0,4 mm bis 1,2 mm aufweisen, und mit einer Anzahl von Mikroeinschnitten versehen und von diesen vorzugsweise durchquert ist, und wobei sich jeweils zumindest eine der querrillenseitigen Profilblockkanten aus Abschnitten zusammensetzt, die zueinander abgewinkelt verlaufen.

Ein derartiger Fahrzeugluftreifen ist beispielsweise aus der US 2008/0202658 A1 bekannt. Gemäß einem Ausführungsbeispiel weist dieser Fahrzeugluftreifen einen Laufstreifen mit einer Vielzahl von mittleren Profilblockreihen und zwei schulterseitigen Profilblockreihen auf. Die mittleren Profilblockreihen sind durch Querrillen in Profilblöcke gegliedert, wobei die Profilblöcke an den Querrillen in Draufsicht sägezahnförmig verlaufende Profilblockkanten aufweisen und jeweils von einer Vielzahl von sich weitgehend parallel zu den Querrillen erstreckenden Einschnitten mit einer Breite von 0,3 mm bis 1,0 mm und einer Tiefe von zumindest 3,0 mm und höchstens 100% der Profiltiefe durchquert sind. Ferner sind die Profilblöcke mit einer Anzahl von in Draufsicht gerade sowie bezüglich der axialen Richtung gegensinnig zu den Querrillen geneigt verlaufenden Mikroeinschnitten mit einer Breite und einer Tiefe von jeweils 0,1 mm bis 2,0 mm versehen. Ein solcher Reifen soll eine gute Eis- und Schneeperformance aufweisen.

Aus der DE 699 17 139 T2 ist ein Fahrzeugluftreifen mit einem Laufstreifen mit durch Umfangsrillen und in axialer Richtung verlaufenden Querrillen voneinander getrennten Profilblöcken bekannt. Jeder Profilblock ist mit einer Vielzahl von in axialer Richtung verlaufenden und mit einer Vielzahl von in Umfangsrichtung verlaufenden Mikroeinschnitten versehen, welche jeweils eine Breite und eine Tiefe von 0,3 mm bis 1,5 mm, beispielsweise von 0,7 mm, aufweisen. Die Mikroeinschnitte durchqueren den jeweiligen Profilblock und bilden daher eine in Draufsicht netzförmige Mikroeinschnittstruktur. Beim gezeigten Ausführungsbeispiel ist in jedem Profilblock ferner ein Einschnitt ausgebildet, welcher stufenförmig sowie innerhalb der Mikroeinschnittstruktur verläuft, daher von den Einschnittgründen der Mikroeinschnitte ausgeht, eine Tiefe von 50% bis 95% der Profiltiefe und eine geringere Breite als die Mikroeinschnitte aufweist. Bei einem solchen Reifen soll die Ableitung von eingefangener Luft beim Formgebungs- und Vulkanisationsvorgang erleichtert sein.

Die JP 2006 151 222 A offenbart einen Fahrzeugluftreifen mit einem Laufstreifen, welcher durch Umfangs-, Schräg- und Querrillen in zwei profilblockartig strukturierte mittlere Profilblockreihen und zwei schulterseitige Profilblockreihen gegliedert ist. Die Profilblöcke der Profilblockreihen weisen querrillenseitig Profilblockkanten auf, welche aus zueinander abgewinkelt verlaufenden Abschnitten zusammengesetzt sind, und sind ferner mit parallel zu den Querrillen verlaufenden Einschnitten und mit im Wesentlichen in Umfangsrichtung verlaufenden Mikroeinschnitten versehen.

Ferner ist aus der EP 3 098 089 A1 ein Fahrzeugluftreifen mit einem Laufstreifen bekannt, welcher schulterseitig Profilblockreihen mit Profilblöcken aufweist, welche in Umfangsrichtung durch Querrillen voneinander getrennt sind, wobei jeweils bei jedem schulterseitigen Profilblock die beiden querrillenseitig verlaufenden Profilblockkanten einen zickzackförmigen Verlauf aufweisen, um die Traktionseigenschaften des Fahrzeugluftreifens auf eisigem Untergrund zu verbessern. Dabei ist jede zweite Querrille aus den Schulterblockreihen Richtung Laufstreifenmitte als Schrägrille fortgesetzt. In der Laufstreifenmitte befindliche Profilblöcke, welche von diesen Schrägrillen begrenzt sind, weisen jeweils nur eine Profilblockkante mit einem zickzackförmigen Verlauf auf.

Ein Fahrzeugluftreifen mit einem weiteren Laufstreifen mit Profilblockreihen, deren Profilblöcke jeweils mit einer Vielzahl von die Profilblöcke durchquerenden Einschnitten versehen sind, ist aus der DE 10 2005 029 873 A1 bekannt. Die in einer Profilblockreihe in Umfangsrichtung aufeinander folgenden Profilblöcke weisen querrillenseitig Profilblockkanten mit zickzackförmigem Verlauf auf.

Die bekannten Ausführungen von Profilblöcken mit Profilblockkanten mit zickzackförmigem Verlauf verbessern zwar die Performance des Reifens auf Schnee, auf eisigem Untergrund zeigen diese Profilblockkanten mit zickzackförmigem Verlauf jedoch wenig Wirkung. Der Erfindung liegt daher die Aufgabe zugrunde, bei einem Fahrzeugluftreifen der eingangs genannten Art die Wintereignung und die Winterfahreigenschaften weiter zu verbessern, insbesondere sollen die Brems- und Traktionseigenschaften sowie die Seitenführung auf schneeigem Untergrund und gleichzeitig die Eisreibung und Haftung auf eisigem, insbesondere mit einer dünnen Wasserschicht, einer dünnen Schneeauflage oder Raureif überzogenen Untergrund deutlich verbessert sein.

Gelöst wird die gestellte Aufgabe erfindungsgemäß dadurch, dass die oder zumindest eine der querrillenseitigen Profilblockkante(n), welche sich aus Abschnitten zusammensetzt, die zueinander abgewinkelt verlaufen, den Profilblock zumindest abschnittsweise auf einem erhöhten Kantenbereich begrenzt, welcher gegenüber dem Niveau der sonstigen Profilblockoberfläche in radialer Richtung eine Höhe von 0,2 mm bis 0,5 mm und an seiner Oberseite eine Breite von 0,2 mm bis 1,2 mm aufweist, wobei sich die Mikroeinschnitte parallel oder weitgehend parallel zu den Querrillen und den Einschnitten erstrecken und eine Breite < 0,4 mm, eine Mindestbreite von 0,2 mm und eine Tiefe von 0,2 mm bis 0,5 mm aufweisen und wobei sich die Einschnitte und die Mikroeinschnitte in Draufsicht auf insbesondere gleiche oder gleichartige Weise jeweils aus einer Anzahl von zueinander abgewinkelt verlaufenden Abschnitten zusammensetzen.

Die erhöhten Kantenbereiche bewirken sowohl auf eisigem Untergrund als auch auf schneeigem Untergrund einen besonders vorteilhaften höheren Kantendruck der Profilblöcke. Auf nassem Eis bewirkt der erhöhte Kantendruck einen verbesserten Wischeffekt unter der Blockkante. Befindet sich eine dünne Schneeauflage auf Eis so wird auch das Wegwischen von Schnee unterstützt. Dadurch wird die Blockoberfläche nicht mehr so stark von Schneekristallen "kontaminiert" und kann dadurch eine bessere Gummi/Eisreibung bewirken. Dieser Effekt ist auch bei Raureif auf eisigem Untergrund vorhanden. Die erhöhten Kantenbereiche an Profilblockkanten, die zu einander abgewinkelt verlaufende Abschnitte aufweisen, verbessern vor allem auch die Bremseigenschaften sowie die Seitenführungseigenschaften auf Schnee, insbesondere durch die größere Kantenlänge gegenüber gerade verlaufenden Profilblockkanten. Die abgewinkelte, beispielsweise gezackte oder gewellte Ausführung dieser Profilblockkanten bewirkt, dass diese Kante meist nur abschnittsweise in den Schnee eindringt und sich so der Kantendruck an bestimmten Stellen stärker erhöht und das Ausmaß des Eindringens der erhöhten Kantenbereiche in Schnee nochmals gesteigert wird. Durch diesen Effekt wird daher die "Fräswirkung" dieser Blockkanten deutlich verbessert.

Die Mikroeinschnitte sind vor allem für eine besonders gute Ableitung des sich auf eisigem oder schneeigem Untergrund beim Abrollen des Reifens bildenden Wasserfilms von Vorteil. Ferner lassen sich durch die gewählten Einschnitte und Mikroeinschnitte besonders gute Griffeigenschaften auf schneeigem Untergrund erzielen.

Bevorzugt ist eine Ausführung, bei welcher der erhöhte Kantenbereich über seine Erstreckungslänge eine konstante Höhe und eine konstante Breite aufweist, sodass der höhere Kantendruck über die Profilblockbreite weitgehend gleichmäßig wirken kann. Dabei ist es auch von Vorteil, wenn der erhöhte Kantenbereich über sämtliche Abschnitte der Profilblockkante verläuft.

Besonders bevorzugt ist ferner eine Ausführung, bei welcher der erhöhte Kantenbereich an seiner Oberseite eine Breite von 0,3 mm bis 1,0 mm und an seiner Basis eine insbesondere konstante Breite aufweist, die zumindest seiner Breite an der Oberseite entspricht, insbesondere um 0,1 mm bis 0,4 mm größer ist als diese Breite. Die vor allem bei neuem Reifen wirksamen erhöhten Kantenbereiche können derart eine besonders gute Fräswirkung auf schneeigem Untergrund erzeugen.

Besonders bevorzugt ist es auch, wenn der erhöhte Kantenbereich zum Niveau der sonstigen Profilblockoberfläche über in radialer Richtung verlaufende oder über schräg geneigte, beispielsweise konvex gerundet ausgeführte Flankenflächen übergeht. Derartige Maßnahmen sind für eine optimale Verteilung des durch die erhöhten Kantenbereiche wirksamen Druckes von Vorteil.

Die den erhöhten Kantenbereich begrenzende, sich aus zueinander abgewinkelt verlaufenden Abschnitten zusammengesetzte Profilblockkante kann auf vielfältige Weise gestaltet sein. Besonders bevorzugt sind Ausführungen mit zickzackförmig, trapezförmig, treppenförmig oder wellenförmig verlaufenden Abschnitten, da solche Abschnitte auf einfache Weise mit einer gleichmäßigen Abfolge der Abschnitte ausgestaltet werden können.

Vorzugsweise verläuft dem erhöhten Kantenbereich benachbart je ein Mikroeinschnitt, auf welchen jeweils ein Einschnitt folgt. Diese Maßnahme unterstützt besonders wirkungsvoll das Ableiten des erwähnten Wasserfilms auf eisigem oder schneeigem Untergrund.

In diesem Zusammenhang ist es auch von Vorteil und bevorzugt, wenn zwischen den Einschnitten jeweils zumindest ein Mikroeinschnitt, insbesondere zwei Mikroeinschnitte verläuft bzw. verlaufen.

Bei einer weiteren bevorzugten Ausgestaltung weisen die Einschnitte Abschnitte auf, welche eine größere Breite besitzen als die übrigen Abschnitte. Diese Abschnitte erstrecken sich insbesondere parallel zu querrillenseitigen Profilblockkanten und weisen eine Breite auf, die um 0,2 mm bis 0,6 mm größer ist als die Breite der übrigen Abschnitte dieser Einschnitte und höchstens 1,2 mm beträgt. In den breiteren Abschnitten kann sich Schnee zur Erhöhung der Schnee-Schnee-Reibung besonders gut ansammeln.

Bei einer besonders bevorzugten Ausführung weisen die Einschnitte und die Mikroeinschnitte in Draufsicht sich parallel zu den querrillenseitigen Profilblockkanten erstreckende Endabschnitte und ansonsten Abschnitte auf, die entlang von aneinander anschließenden, abwechselnd zur einen und zur anderen Profilblockkante weisenden, basislosen, vorzugsweise gleichschenkeligen und zumindest weitgehend übereinstimmend oder übereinstimmend ausgeführten Trapezen verlaufen, wobei die unmittelbar aneinander angrenzenden Trapeze gemeinsame Trapezeschenkel-Abschnitte besitzen. Die Trapezform der Abschnitte, der Einschnitte und der Mikroeinschnitte ist für einen guten Eis- und Schneegriff sowohl beim Bremsen als auch unter Traktionsbelastung besonders vorteilhaft.

Bei dieser Ausführung ist es ferner günstig, wenn sämtliche oder einige der Trapezschenkel-Abschnitte durch verbindende Abschnitte miteinander verbunden sind, welche jene Abschnitte sind, die eine größere Breite aufweisen als die übrigen Abschnitte. Gerade diese Abschnitte sind für das Ausbilden einer besonders vorteilhaften Schnee-Schnee-Reibung besonders günstig, wobei sich in diesem Zusammenhang als besonders vorteilhaft herausgestellt hat, wenn in jenen Einschnitten, die zu den querrillenseitigen Profilblockkanten am nächsten verlaufen, nur die jeweils näher zu den querrillenseitigen Profilblockkanten befindlichen verbindenden Abschnitte jene Abschnitte sind, die eine größere Breite aufweisen als die übrigen Abschnitte.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine vergrößerte Draufsicht auf zwei Profilblöcke eines Laufstreifens eines Fahrzeugluftreifens mit einer Ausführungsvariante der Erfindung,
Fig. 1a eine Schnittdarstellung entlang der Linie Ia-Ia der Fig. 1,
Fig. 2 bis Fig. 5 jeweils in einer zu Fig. 1 analogen Darstellung weitere Ausführungsvarianten der Erfindung.

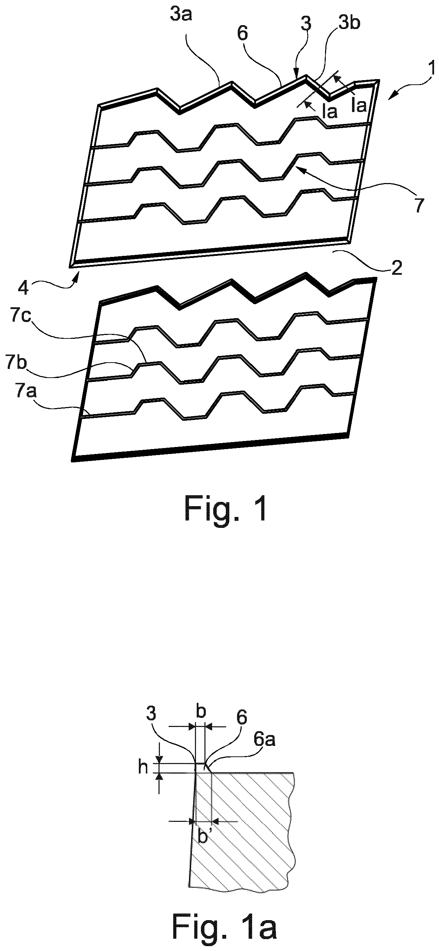

Fahrzeugluftreifen gemäß der Erfindung sind für den Einsatz unter winterlichen Fahrbedingungen, insbesondere auf Schnee oder Eis, besonders gut geeignet und sind Reifen in Radialbauart, vorzugsweise für Personenkraftwagen, Vans oder Light-Trucks. Fig. 1 bis Fig. 5 zeigen Draufsichten auf jeweils zwei in einer vereinfachten Gestalt dargestellte Profilblöcke 1, die insbesondere zu einer in Umfangsrichtung eines Laufstreifens eines Fahrzeugluftreifens umlaufenden Profilblockreihe gehören. Profilblockreihen mit erfindungsgemäß gestalteten Profilblöcken können laufstreifenrand- bzw. schulterseitig oder im zentralen bzw. im mittleren Bereich des Laufstreifens angeordnet sein. Ist die Profilblockreihe im mittleren Bereich des Laufstreifens angeordnet ist sie üblicherweise seitlich von in Umfangsrichtung des Laufstreifens verlaufenden Umfangsrillen, die nicht dargestellt sind, begrenzt. Die Profilblöcke einer schulterseitig verlaufenden Profilblockreihe sind üblicherweise laufstreifeninnenseitig von Rillen begrenzt, die ebenfalls meist Umfangsrillen oder Abschnitte von Umfangsrillen sind aber auch Rillenabschnitte von in Richtung Laufstreifenmitte verlaufenden Schrägrillen und dergleichen sein können. In Umfangsrichtung unmittelbar aufeinander folgende Profilblöcke 1 sind voneinander durch je eine Querrille 2 getrennt. In im mittleren Laufstreifenbereich verlaufenden Profilblockreihen erstrecken sich die Querrillen 2 üblicherweise unter einem Winkel ≤ 45°, in schulterseitigen Profilblockreihen üblicherweise unter einem Winkel ≤ 30° zur axialen Richtung des Laufstreifens. Innerhalb einer Profilblockreihe verlaufen die Querrillen 2 parallel oder weitgehend parallel zueinander.

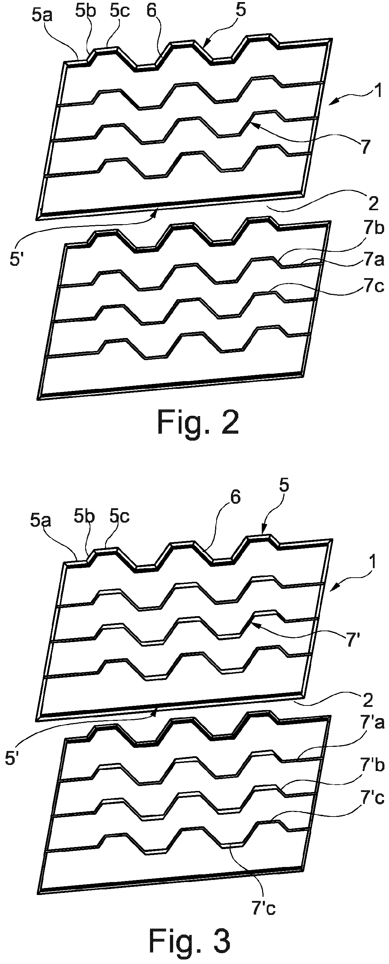

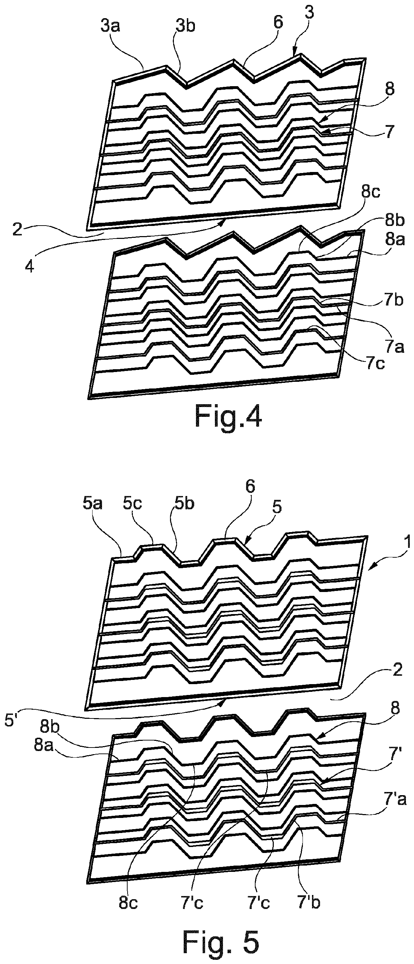

Bei den in Fig. 1 und Fig. 4 gezeigten Ausführungen ist jeder Profilblock 1 entlang der einen Querrille 2 von einer zickzackförmig verlaufenden Profilblockkante 3, zur zweiten Querrille 2 von einer gerade verlaufenden Profilblockkante 4 begrenzt. Bei den in Fig. 2, Fig. 3 und Fig. 5 gezeigten Ausführungen ist jeder Profilblock 1 in Umfangsrichtung entlang der einen ihn begrenzenden Querrille 2 von einer Profilblockkante 5 begrenzt, welche über den Großteil ihrer Erstreckung trapezförmig verläuft, wie nachfolgend noch näher beschrieben wird. Die zweite Profilblockkante 5' dieser Profilblöcke 1 verläuft gerade.

Die in Fig. 1 und Fig. 4 in Zickzackform verlaufende Profilblockkante 3 setzt sich bei den gezeigten Beispielen abwechselnd aus längeren Abschnitten 3a und kürzeren Abschnitten 3b zusammen, die jeweils miteinander einen stumpfen Winkel einschließen, welcher in der Größenordnung von 100° bis 130° beträgt. Die Zickzackform selbst ist nicht Gegenstand der Erfindung und kann auf eine beliebige und insbesondere auf eine der bekannten Arten erfolgen. An jeden Abschnitt 3a, 3b schließt eine in radialer Richtung oder im Wesentlichen in radialer Richtung verlaufende, den Profilblock 1 und daher auch die Querrille 2 begrenzende Blockflanke an, die an die längeren und die kürzeren Abschnitte 3a, 3b anschließende nicht gezeigte Blockflankenabschnitte aufweist.

Bei den in Fig. 2, Fig. 3 und Fig. 5 gezeigten Ausführungen weist die Profilblockkante 5 parallel zur zweiten Profilblockkante 5' verlaufende Endabschnitte 5a und Abschnitte 5b, 5c auf, die aneinander gereihte, basislose und vorzugsweise gleichschenkelige, weitgehend übereinstimmend ausgeführte Trapeze ergeben, wobei die unmittelbar aneinander angrenzenden Trapeze gemeinsame Trapezschenkel-Abschnitte 5b besitzen. Die Trapezschenkel-Abschnitte 5b schließen in Draufsicht miteinander Winkel von insbesondere 110° bis 160° ein, die diese Trapezschenkel-Abschnitte 5b jeweils verbindenden Abschnitte 5c verlaufen bei der gezeigten Ausführung parallel zu den seitlichen Endabschnitten 5a der Profilblockkante 5. Der Profilblock 1 weist somit die Querrille 2 begrenzende an die Abschnitte 5a, 5b, 5c anschließende und nicht gezeigte Blockflankenabschnitte auf, welche in radialer beziehungsweise im Wesentlichen in radialer Richtung verlaufen.

Die Profilblockkanten 3 und 5 sowie bei den gezeigten Ausführungen auch die Profilblockkanten 4, 5' begrenzen jeden Profilblock 1 auf gegenüber der sonstigen Profilblockoberfläche erhöhten Kantenbereichen 6. Wie Fig. 1a zeigt, sind die erhöhten Kantenbereiche 6 schmale, bei den gezeigten Ausführungen über die gesamte Erstreckung, demnach über sämtliche Abschnitte 3a, 3b bzw. 5a, 5b und 5c, der Profilblockkanten 3 bzw. 5 sowie über die gesamte Erstreckung der Profilblockkanten 4, 5' verlaufende rippenartige Erhebungen, die gegenüber dem Niveau der sonstigen Profilblockoberfläche eine Höhe h aufweisen, welche 0,2 mm bis 0,5 mm, insbesondere bis zu 0,3 mm, beträgt und in sämtlichen Profilblöcken 1 einer Profilblockreihe gleich groß ist. Die erhöhten Kantenbereiche 6 weisen an ihrer Oberseite eine Breite b von 0,2 mm bis 1,2 mm, insbesondere von 0,3 mm bis 1,0 mm, auf. Zur Profilblockoberfläche erfolgt der Übergang der erhöhten Kantenbereiche 6 beispielsweise wie in Fig. 1a gezeigt über schräge Flankenflächen 6a, alternativ auch über in radialer Richtung verlaufende oder im Querschnitt konvex gerundet ausgeführte Flankenflächen, sodass die erhöhten Kantenbereiche an ihrer Basis, am Niveau der Profilblockoberflächen, eine Breite b' aufweisen, die zumindest der Breite b entspricht, insbesondere um 0,1 mm bis 0,4 mm größer ist als die Breite b. Bei einer alternativen Ausführung sind auch jene Profilblockkanten, welche die Profilblöcke 1 seitlich, etwa zu Umfangsrillen, begrenzen, mit erhöhten Kantenbereichen, wie dargestellt und beschrieben, versehen.

Die Profilblöcke 1 sind bei sämtlichen Ausführungen, wie nachfolgend näher erläutert wird, mit Einschnitten 7 (Fig. 1, Fig. 2), mit Einschnitten 7' (Fig. 3), mit Einschnitten 7 und Mikroeinschnitten 8 (Fig. 4) oder mit Einschnitten 7' und Mikroeinschnitten 8 (Fig. 5) versehen, wobei die Einschnitte 7, 7' und Mikroeinschnitte 8 sich parallel oder weitgehend parallel zu den Profilblockkanten 3, 4, 5' und 5 erstrecken und die Profilblöcke 1 durchqueren. Die Einschnitte 7, 7' unterscheiden sich von den Mikroeinschnitten 8 durch ihre Breite, ihre Tiefe und ihren Tiefenverlauf. Die Breite der Einschnitte 7, 7' an der Profilblockoberfläche beträgt 0,4 mm bis 1,2 mm, insbesondere bis zu 0,9 mm, wobei die Einschnitte 7 eine insbesondere konstante Breite von bis zu 0,6 mm, die Einschnitte 7' Abschnitte mit einer geringeren Breite und Abschnitte mit größerer Breite, wie nachfolgend noch näher beschrieben wird, aufweisen.

Die Mikroeinschnitte 8 weisen eine Breite auf, die kleiner ist als 0,4 mm und vorzugsweise 0,2 mm bis 0,3 mm beträgt. Die Tiefe der Mikroeinschnitte 8 beträgt 0,2 mm bis 0,5 mm. Die Einschnitte 7, 7' hingegen weisen eine Tiefe auf, die an den seichtesten Stellen der Einschnitte 7, 7' mindestens 20 % der Profiltiefe, die üblicherweise der größten Tiefe von Hauptrillen des Laufstreifens, meist von Umfangsrillen, entspricht, beträgt. Darüber hinaus weisen die Einschnitte 7, 7' an ihren tiefsten Stellen eine Tiefe auf, die der Profiltiefe entsprechen kann, vorzugsweise jedoch um mindestens 1,6 mm geringer ist als die Profiltiefe. Bei den dargestellten Ausführungsbeispielen befinden sich in jedem Profilblock drei Einschnitte 7 oder 7', wobei die Anzahl der Einschnitte 7, 7' zumindest zwei beträgt und insbesondere bis zu sieben, vorzugsweise bis zu fünf, betragen kann.

Bei sämtlichen Ausführungsbeispielen weisen ferner die Einschnitte 7, 7' gerade und parallel zu den Profilblockkanten 4, 5' verlaufende Endabschnitte 7a, 7'a auf. Zwischen den Endabschnitten 7a, 7'a weisen die Einschnitte 7, 7' weitgehend analog zu den Profilblockkanten 5 der in Fig. 2, 3 und 5 gezeigten Profilblöcke 1 verlaufende Abschnitte 7b, 7c sowie 7'b, 7'c auf, die jeweils insgesamt und in Draufsicht entlang von aneinander anschließenden, abwechselnd in die eine und in die andere Umfangsrichtung bzw. abwechselnd zur einen und zur anderen Profilblockkante 3, 4 bzw. 5, 5' weisenden, basislosen und gleichschenkeligen, weitgehend übereinstimmend ausgeführten Trapezen verlaufen. Die unmittelbar aneinander angrenzenden Trapeze besitzen gemeinsame Trapezschenkel-Abschnitte 7b, 7'b, welche in Draufsicht miteinander einen Winkel von insbesondere 110° bis 160° einschließen. Die Abschnitte 7c, 7'c verbinden die Trapezschenkel-Abschnitte 7b, 7'b und verlaufen parallel zu den Endabschnitten 7a, 7'a. Bei den in Fig. 1, Fig. 2 und Fig. 4 gezeigten Ausführungen weisen die Einschnitte 7 über ihren Verlauf eine konstante Breite auf. Bei den in Fig. 3 und Fig. 5 gezeigten Ausführungsvarianten weisen sämtliche oder bestimmte, die Trapezschenkel-Abschnitte 7'b verbindenden Abschnitte 7'c eine größere Breite auf als die Trapezschenkel-Abschnitte 7'b und die Endabschnitte 7'a. Die Breite dieser verbindenden Abschnitte 7'c ist vorzugsweise um 0,2 mm bis 0,6 mm größer als die Breite der sonstigen Abschnitte 7'a, 7'b der Einschnitte 7' und höchstens 1,2 mm.

Breitere Abschnitte sind bei den dargestellten, bevorzugten Ausführungen zumindest jene Abschnitte 7'c, die sich in den zu den Profilblockkanten 5' und 5 benachbart verlaufenden Einschnitten 7' jeweils näher zu den Profilblockkanten 5', 5 befinden. In den sonstigen Einschnitten 7' sind vorzugsweise sämtliche verbindenden Abschnitte 7'c breitere Abschnitte, wie beschrieben.

Bei den in den beiden in den Figuren 4 und 5 gezeigten Ausführungen von Profilblöcken 1 verläuft jeweils den Profilblockkanten 3, 4 (Fig. 4) 5', 5 (Fig. 5) benachbart ein Mikroeinschnitt 8, zwischen den Einschnitten 7, 7' befindet sich jeweils zumindest ein Mikroeinschnitt 8, vorzugsweise befinden sich zwei Mikroeinschnitte 8 zwischen einzelnen oder sämtlichen Einschnitten 7, 7'. Die Mikroeinschnitte 8 weisen in Draufsicht einen analogen Verlauf zu den Einschnitten 7, 7' auf und besitzen daher parallel zu den Profilblockkanten 4, 5' verlaufende Endabschnitte 8a, Trapezschenkel-Abschnitte 8b und verbindende Abschnitte 8c.

Die Erfindung ist lediglich durch die angehängten Ansprüche beschränkt, nicht aber auf die dargestellten und beschriebenen Ausführungsvarianten. Insbesondere ist es möglich, Einschnitte und Mikroeinschnitte vorzusehen, welche anstelle eines trapezförmigen Verlaufes einen zickzack-, treppen- oder wellenförmigen Verlauf aufweisen.

### Bezugszeichenliste

- 1: Profilblock
- 2: Querrille
- 3, 4, 5', 5: Profilblockkante
- 3a, 3b: Abschnitt
- 5a, 5b, 5c: Abschnitt
- 6: Kantenbereich
- 6a: Flankenfläche
- 7, 7': Einschnitt
- 7a, 7b, 7c: Abschnitt
- 7'a, 7'b, 7'c: Abschnitt
- 8: Mikroeinschnitt
- 8a, 8b, 8c: Abschnitt
- b, b': Breite
- h: Höhe

## Patentansprüche

1. Fahrzeugluftreifen mit einem Laufstreifen mit zumindest einer Profilblöcke (1) aufweisenden oder profilblockartig strukturierten Profilblockreihe, wobei die Profilblöcke (1) in Umfangsrichtung durch Querrillen (2) voneinander getrennt sind, welche sich unter einem Winkel ≤ 45° zur axialen Richtung erstrecken, wobei jeder Profilblock (1) querrillenseitig und an der Laufstreifenperipherie von Profilblockkanten (3, 4, 5', 5) begrenzt ist, mit einer Anzahl von sich parallel oder weitgehend parallel zu den Querrillen (2) erstreckenden Einschnitten (7, 7') durchquert ist, welche eine Breite von 0,4 mm bis 1,2 mm aufweisen, und mit einer Anzahl von Mikroeinschnitten (8) versehen und von diesen vorzugsweise durchquert ist, und wobei sich jeweils zumindest eine der querrillenseitigen Profilblockkanten (3, 5) aus Abschnitten (3a, 3b; 5a, 5b, 5c) zusammensetzt, die zueinander abgewinkelt verlaufen,
**dadurch gekennzeichnet,**
**dass** die oder zumindest eine der querrillenseitigen Profilblockkante(n) (3, 5), welche sich aus Abschnitten (3a, 3b; 5a, 5b, 5c) zusammensetzt, die zueinander abgewinkelt verlaufen, den Profilblock (1) zumindest abschnittsweise auf einem erhöhten Kantenbereich (6) begrenzt, welcher gegenüber dem Niveau der sonstigen Profilblockoberfläche in radialer Richtung eine Höhe (h) von 0,2 mm bis 0,5 mm und an seiner Oberseite eine Breite (b) von 0,2 mm bis 1,2 mm aufweist, wobei sich die Mikroeinschnitte (8) parallel oder weitgehend parallel zu den Querrillen (2) und den Einschnitten (7, 7') erstrecken und eine Breite < 0,4 mm, eine Mindestbreite von 0,2 mm und eine Tiefe von 0,2 mm bis 0,5 mm aufweisen und wobei sich die Einschnitte (7, 7') und die Mikroeinschnitte (8) in Draufsicht auf insbesondere gleiche oder gleichartige Weise jeweils aus einer Anzahl von zueinander abgewinkelt verlaufenden Abschnitten (7a, 7b, 7c; 7'a, 7'b, 7'c; 8a, 8b, 8c) zusammensetzen.

2. Fahrzeugluftreifen nach Anspruch 1, **dadurch gekennzeichnet, dass** der erhöhte Kantenbereich (6) über seine Erstreckungslänge eine konstante Höhe (h) und eine konstante Breite (b) aufweist.

3. Fahrzeugluftreifen nach Anspruch 1 oder 2, **dadurch gekennzeichnet, dass** der erhöhte Kantenbereich (6) über sämtliche Abschnitte (3a, 3b; 5a, 5b, 5c) der Profilblockkante (3, 5) verläuft.

4. Fahrzeugluftreifen nach einem der Ansprüche 1 bis 3, **dadurch gekennzeichnet, dass** der erhöhte Kantenbereich (6) an seiner Oberseite eine Breite (b) von 0,3 mm bis 1,0 mm und an seiner Basis eine insbesondere konstante Breite (b') aufweist, die zumindest seiner Breite (b) an der Oberseite entspricht, insbesondere um 0,1 mm bis 0,4 mm größer ist als diese Breite (b).

5. Fahrzeugluftreifen nach einem der Ansprüche 1 bis 4, **dadurch gekennzeichnet, dass** der erhöhte Kantenbereich (6) zum Niveau der sonstigen Profilblockoberfläche über in radialer Richtung verlaufende oder über schräg geneigte, beispielsweise konvex gerundet ausgeführte, Flankenflächen (6a) übergeht.

6. Fahrzeugluftreifen nach einem der Ansprüche 1 bis 5, **dadurch gekennzeichnet, dass** die den erhöhten Kantenbereich (6) begrenzende, sich aus zueinander abgewinkelt verlaufenden Abschnitten (3a, 3b; 5a, 5b, 5c) zusammensetzende Profilblockkante (3, 5) zickzackförmig, trapezförmig, treppenförmig oder wellenförmig verläuft.

7. Fahrzeugluftreifen nach einem der Ansprüche 1 bis 6, **dadurch gekennzeichnet, dass** dem erhöhten Kantenbereich (6) benachbart je ein Mikroeinschnitt (8) verläuft, auf welchen ein Einschnitt (7, 7') folgt.

8. Fahrzeugluftreifen nach einem der Ansprüche 1 bis 7, **dadurch gekennzeichnet, dass** zwischen den Einschnitten (7, 7') jeweils zumindest ein Mikroeinschnitt (8), insbesondere zwei Mikroeinschnitte (8), verläuft bzw. verlaufen.

9. Fahrzeugluftreifen nach einem der Ansprüche 1 bis 8, **dadurch gekennzeichnet, dass** sich die Einschnitte (7, 7') und die Mikroeinschnitte (8), in Draufsicht auf den Profilblock, auf insbesondere gleiche oder gleichartige Weise wie die Profilblockkante (3, 5), jeweils aus einer Anzahl von unter Winkeln zueinander verlaufenden Abschnitten (7a, 7b, 7c; 7'a, 7'b, 7'c; 8a, 8b, 8c) zusammensetzen.

10. Fahrzeugluftreifen nach einem der Ansprüche 1 bis 9, **dadurch gekennzeichnet, dass** die Einschnitte (7') Abschnitte (7'c) aufweisen, welche eine größere Breite besitzen als die übrigen Abschnitte (7'a, 7'b).

11. Fahrzeugluftreifen nach Anspruch 10, **dadurch gekennzeichnet, dass** sich die Abschnitte (7'c) mit der größeren Breite parallel zu querrillenseitigen Profilblockkanten (3, 4, 5, 5') erstrecken.

12. Fahrzeugluftreifen nach Anspruch 10 oder 11, **dadurch gekennzeichnet, dass** die Abschnitte (7'c) mit der größeren Breite eine Breite aufweisen, die um 0,2 mm bis 0,6 mm größer ist als die Breite der übrigen Abschnitte (7'a, 7'b) dieser Einschnitte (7') und höchstens 1,2 mm beträgt.

13. Fahrzeugluftreifen nach einem der Ansprüche 1 bis 12, **dadurch gekennzeichnet, dass** die Einschnitte (7, 7') und die Mikroeinschnitte (8) in Draufsicht sich parallel zu den querrillenseitigen Profilblockkanten (3, 4, 5, 5') erstreckende Endabschnitte (7a, 7'a, 8a) und ansonsten Abschnitte (7b, 7'b, 7c, 7'c, 8b, 8c) aufweisen, die entlang von aneinander anschließenden, abwechselnd zur einen und zur anderen Profilblockkante (3, 4, 5, 5') weisenden, basislosen, vorzugsweise gleichschenkeligen und zumindest weitgehend übereinstimmend oder übereinstimmend ausgeführten Trapezen verlaufen, wobei die unmittelbar aneinander angrenzenden Trapeze gemeinsame Trapezschenkel-Abschnitte (7b, 7'b, 8b) besitzen.

14. Fahrzeugluftreifen nach Anspruch 13, **dadurch gekennzeichnet, dass** sämtliche oder einige der Trapezschenkel-Abschnitte (7'b) durch verbindende Abschnitte (7'c) miteinander verbunden sind, welche jene Abschnitte sind, die eine größere Breite aufweisen als die übrigen Abschnitte.

15. Fahrzeugluftreifen nach Anspruch 14, **dadurch gekennzeichnet, dass** in jenen Einschnitten (7'), die zu den querrillenseitigen Profilblockkanten (5, 5') am nächsten verlaufen, nur die jeweils näher zu den querrillenseitigen Profilblockanten (5, 5') befindlichen verbindenden Abschnitte (7'c) jene Abschnitte sind, die eine größere Breite aufweisen als die übrigen Abschnitte.

## Claims

1. Pneumatic vehicle tyre having a tread with at least one row of profile blocks which has profile blocks (1) or is structured in the manner of profile blocks, wherein the profile blocks (1) are separated from one another in the circumferential direction by transverse channels (2), which extend at an angle of ≤ 45° with respect to the axial direction, wherein each profile block (1) is delimited on the transverse channel side and at the tread periphery by profile block edges (3, 4, 5', 5), is crossed by a number of sipes (7, 7'), which extend parallel or largely parallel to the transverse channels (2) and have a width of 0.4 mm to 1.2 mm, and is provided with a number of micro-sipes (8) and is preferably crossed by them, and wherein at least one of the profile block edges (3, 5) on the transverse channel side is respectively made up of portions (3a, 3b; 5a, 5b, 5c) which run in an angled fashion with respect to one another,
**characterized in that** the or at least one of the profile block edge(s) (3, 5) on the transverse channel side which is made up of portions (3a, 3b; 5a, 5b, 5c) that run in an angled fashion with respect to one another delimits the profile block (1) at least in portions at an elevated edge region (6), which has a height (h), in relation to the level of the rest of the profile block surface in a radial direction, of 0.2 mm to 0.5 mm and has on its upper side a width (b) of 0.2 mm to 1.2 mm, wherein the micro-sipes (8) extend parallel or largely parallel to the transverse channels (2) and the sipes (7, 7') and have a width of < 0.4 mm, a minimum width of 0.2 mm and a depth of 0.2 mm to 0.5 mm and wherein the sipes (7, 7') and the micro-sipes (8) in plan view are respectively made up, in particular in the same or a similar way, of a number of portions (7a, 7b, 7c; 7'a, 7'b, 7'c; 8a, 8b, 8c) which run in an angled fashion with respect to one another.

2. Pneumatic vehicle tyre according to Claim 1, **characterized in that** the elevated edge region (6) has a constant height (h) and a constant width (b) over the length of its extent.

3. Pneumatic vehicle tyre according to Claim 1 or 2, **characterized in that** the elevated edge region (6) runs over all of the portions (3a, 3b; 5a, 5b, 5c) of the profile block edge (3, 5).

4. Pneumatic vehicle tyre according to one of Claims 1 to 3, **characterized in that** the elevated edge region (6) has on its upper side a width (b) of 0.3 mm to 1.0 mm and at its base an in particular constant width (b'), which corresponds at least to its width (b) on the upper side, in particular is greater by 0.1 mm to 0.4 mm than this width (b).

5. Pneumatic vehicle tyre according to one of Claims 1 to 4, **characterized in that** the elevated edge region (6) goes over to the level of the rest of the profile block surface by way of flank surfaces (6a) running in the radial direction or by way of sloping, for example convexly rounded, flank surfaces (6a).

6. Pneumatic vehicle tyre according to one of Claims 1 to 5, **characterized in that** the profile block edge (3, 5) that delimits the elevated edge region (6) and is made up of portions (3a, 3b; 5a, 5b, 5c) which run in an angled fashion with respect to one another runs in a zigzagging, trapezoidal, stepped or wave-shaped form.

7. Pneumatic vehicle tyre according to one of Claims 1 to 6, **characterized in that**, adjacent to the elevated edge region (6), in each case there runs a micro-sipe (8), which is followed by a sipe (7, 7').

8. Pneumatic vehicle tyre according to one of Claims 1 to 7, **characterized in that** at least one micro-sipe (8), in particular two micro-sipes (8), respectively runs or run between the sipes (7, 7').

9. Pneumatic vehicle tyre according to one of Claims 1 to 8, **characterized in that** the sipes (7, 7') and the micro-sipes (8) in plan view of the profile block are respectively made up, in particular in the same or a similar way as the profile block edge (3, 5), of a number of portions (7a, 7b, 7c; 7'a, 7'b, 7'c; 8a, 8b, 8c) which run at angles with respect to one another.

10. Pneumatic vehicle tyre according to one of Claims 1 to 9, **characterized in that** the sipes (7') have portions (7'c) which have a greater width than the rest of the portions (7'a, 7'b).

11. Pneumatic vehicle tyre according to Claim 10, **characterized in that** the portions (7'c) with the greater width extend parallel to profile block edges (3, 4, 5, 5') on the transverse channel side.

12. Pneumatic vehicle tyre according to Claim 10 or 11, **characterized in that** the portions (7'c) with the greater width have a width which is greater by 0.2 mm to 0.6 mm than the width of the rest of the portions (7'a, 7'b) of these sipes (7') and is at most 1.2 mm.

13. Pneumatic vehicle tyre according to one of Claims 1 to 12, **characterized in that** the sipes (7, 7') and the micro-sipes (8) have, in plan view, end portions (7a, 7'a, 8a) extending parallel to the profile block edges (3, 4, 5, 5') on the transverse channel side and otherwise portions (7b, 7'b, 7c, 7'c, 8b, 8c) that run along baseless, preferably isosceles and at least largely coinciding or coincidingly configured trapezoids adjoining one another and facing alternately one and the other profile block edge (3, 4, 5, 5'), wherein the trapezoids directly adjoining one another have common trapezoid leg portions (7b, 7'b, 8b).

14. Pneumatic vehicle tyre according to Claim 13, **characterized in that** all or some of the trapezoid leg portions (7'b) are connected to one another by connecting portions (7'c), which are those portions that have a greater width than the rest of the portions.

15. Pneumatic vehicle tyre according to Claim 14, **characterized in that**, in those sipes (7') that run closest to the profile block edges (5, 5') on the transverse channel side, only the connecting portions (7'c) respectively located closer to the profile block edges (5, 5') on the transverse channel side are those portions that have a greater width than the rest of the portions.

## Revendications

1. Pneumatique de véhicule muni d'une bande de roulement munie d'au moins une rangée de blocs profilés comprenant des blocs profilés (1) ou structurée à la manière de blocs profilés, les blocs profilés (1) étant séparés les uns des autres dans la direction circonférentielle par des rainures transversales (2), qui s'étendent à un angle ≤ 45° par rapport à la direction axiale, chaque bloc profilé (1) étant délimité côté rainure transversale et sur la périphérie de la bande de roulement par des bords de bloc profilé (3, 4, 5', 5), étant traversé par un nombre d'entailles (7, 7') qui s'étendent parallèlement ou dans une large mesure parallèlement aux rainures transversales (2), qui présentent une largeur de 0,4 mm à 1,2 mm, et étant muni d'un nombre de micro-entailles (8) et étant de préférence traversé par celles-ci, et au moins un des bords de bloc profilé côté rainure transversale (3, 5) se composant respectivement de sections (3a, 3b ; 5a, 5b, 5c), qui s'étendent en formant un angle les unes par rapport aux autres,
**caractérisé en ce que**
le ou au moins un des bords de bloc profilé côté rainure transversale (3, 5) qui se compose de sections (3a, 3b ; 5a, 5b, 5c), qui s'étendent en formant un angle les unes par rapport aux autres, délimite le bloc profilé (1) au moins en sections sur une zone de bord surélevée (6) qui présente, par rapport au niveau de l'autre surface du bloc profilé, dans la direction radiale, une hauteur (h) de 0,2 mm à 0,5 mm et, sur son côté supérieur, une largeur (b) de 0,2 mm à 1,2 mm, les micro-entailles (8) s'étendant parallèlement ou dans une large mesure parallèlement aux rainures transversales (2) et aux entailles (7, 7'), et présentant une largeur < 0,4 mm, une largeur minimale de 0,2 mm et une profondeur de 0,2 mm à 0,5 mm, et les entailles (7, 7') et les micro-entailles (8) se composant en vue de dessus respectivement d'un nombre de sections (7a, 7b, 7c ; 7'a, 7'b, 7'c ; 8a, 8b, 8c) qui s'étendent en formant un angle les unes par rapport aux autres, notamment de la même manière ou d'une manière similaire.

2. Pneumatique de véhicule selon la revendication 1, **caractérisé en ce que** la zone de bord surélevée (6) présente une hauteur (h) constante et une largeur (b) constante sur sa longueur d'étendue.

3. Pneumatique de véhicule selon la revendication 1 ou 2, **caractérisé en ce que** la zone de bord surélevée (6) s'étend sur toutes les sections (3a, 3b ; 5a, 5b, 5c) du bord de bloc profilé (3, 5).

4. Pneumatique de véhicule selon l'une quelconque des revendications 1 à 3, **caractérisé en ce que** la zone de bord surélevée (6) présente sur son côté supérieur une largeur (b) de 0,3 mm à 1,0 mm et sur sa base une largeur (b') notamment constante, qui correspond au moins à sa largeur (b) sur le côté supérieur, notamment est supérieure de 0,1 mm à 0,4 mm à cette largeur (b).

5. Pneumatique de véhicule selon l'une quelconque des revendications 1 à 4, **caractérisé en ce que** la zone de bord surélevée (6) passe au niveau de l'autre surface de bloc profilé par l'intermédiaire de surfaces de flanc (6a) s'étendant dans la direction radiale ou inclinées en biais, par exemple réalisées sous forme arrondie convexe.

6. Pneumatique de véhicule selon l'une quelconque des revendications 1 à 5, **caractérisé en ce que** le bord de blocs profilé (3, 5) délimitant la zone de bord surélevée (6), qui se compose de sections (3a, 3b ; 5a, 5b, 5c) qui s'étendent en formant un angle les unes par rapport aux autres, s'étend en zigzag, sous forme trapézoïdale, en escalier ou sous forme ondulée.

7. Pneumatique de véhicule selon l'une quelconque des revendications 1 à 6, **caractérisé en ce qu'**une micro-entaille (8), qui est suivie par une entaille (7, 7'), s'étend à chaque fois à côté de la zone de bord surélevée (6).

8. Pneumatique de véhicule selon l'une quelconque des revendications 1 à 7, **caractérisé en ce qu'**à chaque fois au moins une micro-entaille (8), notamment deux micro-entailles (8), s'étend ou s'étendent entre les entailles (7, 7').

9. Pneumatique de véhicule selon l'une quelconque des revendications 1 à 8, **caractérisé en ce que** les entailles (7, 7') et les micro-entailles (8) se composent en vue de dessus sur le bloc profilé respectivement d'un nombre de sections (7a, 7b, 7c ; 7'a, 7'b, 7'c ; 8a, 8b, 8c) qui s'étendent en formant un angle les unes par rapport aux autres, notamment de la même manière ou d'une manière similaire au bord de bloc profilé (3, 5).

10. Pneumatique de véhicule selon l'une quelconque des revendications 1 à 9, **caractérisé en ce que** les entailles (7') comprennent des sections (7'c) qui possèdent une largeur plus grande que les autres sections (7'a, 7'b).

11. Pneumatique de véhicule selon la revendication 10, **caractérisé en ce que** les sections (7'c) ayant la plus grande largeur s'étendent parallèlement aux bords de bloc profilé côté rainure transversale (3, 4, 5, 5').

12. Pneumatique de véhicule selon la revendication 10 ou 11, **caractérisé en ce que** les sections (7'c) ayant la plus grande largeur présentent une largeur qui est supérieure de 0,2 mm à 0,6 mm à la largeur des autres sections (7'a, 7'b) de cette entaille (7') et qui est d'au plus 1,2 mm.

13. Pneumatique de véhicule selon l'une quelconque des revendications 1 à 12, **caractérisé en ce que** les entailles (7, 7') et les micro-entailles (8) comprennent en vue de dessus des sections d'extrémité (7a, 7'a, 8a) s'étendant parallèlement aux bords de bloc profilé côté rainure transversale (3, 4, 5, 5') et d'autres sections (7b, 7'b, 7c, 7'c, 8b, 8c), qui s'étendent le long de trapèzes raccordés les uns aux autres, dirigés en alternance vers l'un et vers l'autre bord de bloc profilé (3, 4, 5, 5'), sans base, de préférence isocèles et réalisés au moins dans une large mesures sous forme identique ou sous forme identique, les trapèzes raccordés directement les uns aux autres possédant des sections de branche de trapèze communes (7b, 7'b, 8b).

14. Pneumatique de véhicule selon la revendication 13, **caractérisé en ce que** toutes les ou certaines des sections de branche de trapèze (7'b) sont reliées les unes aux autres par des sections de liaison (7'c), qui sont les sections qui présentent une plus grande largeur que les autres sections.

15. Pneumatique de véhicule selon la revendication 14, **caractérisé en ce que**, dans les entailles (7') qui s'étendent le plus près des bords de bloc profilé côté rainure transversale (5, 5'), seules les sections de liaison (7'c) se trouvant respectivement plus près des bords de bloc profilé côté rainure transversale (5, 5') sont les sections qui présentent une plus grande largeur que les autres sections.
